(19) Europäisches Patentamt / European Patent Office / Office européen des brevets

(11) **EP 2 318 980 B1**

(12) **FASCICULE DE BREVET EUROPEEN**

(45) Date de publication et mention
de la délivrance du brevet:
**11.03.2015 Bulletin 2015/11**

(21) Numéro de dépôt: **09740506.2**

(22) Date de dépôt: **31.08.2009**

(51) Int Cl.:
***G06K 9/00*** *(2006.01)*

(86) Numéro de dépôt international:
**PCT/FR2009/051645**

(87) Numéro de publication internationale:
**WO 2010/023415 (04.03.2010 Gazette 2010/09)**

(54) **PROCÉDÉ DE DÉTERMINATION D'UNE PSEUDO-IDENTITÉ À PARTIR DE CARACTERISTIQUES DE MINUTIES ET DISPOSITIF ASSOCIÉ**

VERFAHREN ZUR BESTIMMUNG EINER PSEUDOIDENTITÄT AUF DER GRUNDLAGE VON EIGENSCHAFTEN VON MINUTIEN UND DIESBEZÜGLICHE EINRICHTUNG

METHOD OF DETERMINING A PSEUDO-IDENTITY ON THE BASIS OF CHARACTERISTICS OF MINUTIAE AND ASSOCIATED DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **01.09.2008 FR 0855853**

(43) Date de publication de la demande:
**11.05.2011 Bulletin 2011/19**

(73) Titulaire: **MORPHO**
**92130 Issy-Les-Moulineaux (FR)**

(72) Inventeurs:
• **BRINGER, Julien**
**F-92130 Issy-les-Moulineaux (FR)**
• **CHABANNE, Hervé**
**F-92130 Issy-les-Moulineaux (FR)**

(74) Mandataire: **Cabinet Plasseraud**
**52, rue de la Victoire**
**75440 Paris Cedex 09 (FR)**

(56) Documents cités:
• **ROSS A A ET AL: "Toward reconstructing fingerprints from minutiae points"** PROCEEDINGS OF THE SPIE, SPIE, BELLINGHAM, VA, US, vol. 5779, no. 1, 28 mars 2005 (2005-03-28), pages 68-80, XP007908474 ISSN: 0277-786X
• **TULYAKOV ET AL: "Symmetric hash functions for secure fingerprint biometric systems"** PATTERN RECOGNITION LETTERS, ELSEVIER, AMSTERDAM, NL, vol. 28, no. 16, 11 octobre 2007 (2007-10-11), pages 2427-2436, XP022293695 ISSN: 0167-8655
• **CAPPELLI R ET AL: "Evaluating Minutiae Template Vulnerability to Masquerade Attack"** AUTOMATIC IDENTIFICATION ADVANCED TECHNOLOGIES, 2007 IEEE WORKSHOP ON, IEEE, PISCATAWAY, NJ, USA, 1 juin 2007 (2007-06-01), pages 174-179, XP031111395 ISBN: 978-1-4244-1299-0

EP 2 318 980 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la détermination d'une pseudo-identité à partir d'éléments se rapportant à une empreinte digitale.

Différentes techniques sont connues pour obtenir un identifiant relatif à un individu à partir d'éléments se rapportant à une empreinte digitale, par example « Towards Reconstructing Fingerprints from Minutive Points » de A. Ross et al. Proc. SPIE, Vol 5779, No.1, pp. 68-80, 2005.

Une de ces techniques décrite dans l'article « Fingerprint matching from minutiae texture maps » de F. Benhammadi, M.N. Amirouche, H. Hentous, K. Bey Beghdad et M. Aissani, Pattern Recognition 40 (2007) 189-197, apparaît particulièrement intéressante.

Elle prévoit de déterminer un identifiant fixe à partir de l'image d'une empreinte digitale, en en extrayant les minuties, c'est-à-dire les accidents sur les lignes de crêtes de cette empreinte, tels que les fins de crêtes et les bifurcations, puis en appliquant localement, autour de chacune des minuties extraites, des filtres de Gabor à la texture de l'empreinte digitale.

Contrairement à des techniques antérieures où l'identifiant résultait de l'application de filtres de Gabor autour d'un centre morphologique ("core" en anglais) qui n'était pas toujours présent ou détectable au sein de l'image de l'empreinte digitale, un identifiant selon l'article susmentionné peut toujours être obtenu, car on peut toujours identifier des minuties au sein de l'image de l'empreinte digitale.

L'identifiant obtenu selon cet article présente en outre une meilleure robustesse face à des transformations géométriques qui pourraient impacter l'image de l'empreinte digitale, telles que des translations et/ou rotations, puisque chacun des filtres de Gabor est choisi en tenant compte de l'orientation de la minutie autour de laquelle il est appliqué.

La technique décrite dans cet article nécessite cependant la connaissance préalable et totale de l'image d'une empreinte digitale. Ceci peut poser problème en pratique, car la plupart des bases de données biométriques actuelles ne stockent pas de telles images, mais uniquement des caractéristiques relatives à des minuties, comme cela est d'ailleurs requis par le standard ISO/IEC 19794-2 :2005 « Information technology - Biometric data interchange formats - Part 2: Finger minutiae data ».

De plus, la comparaison d'identifiants déterminés selon l'article « Fingerprint matching from minutiae texture maps » susmentionné donne des résultats non optimaux, dans la mesure où elle ne tient pas compte de certaines spécificités locales des images des empreintes digitales correspondantes, comme leur qualité ou leur pertinence.

Un but de la présente invention est de limiter certains au moins des inconvénients évoqués plus haut.

L'invention propose ainsi un procédé de détermination d'une pseudo-identité à partir de caractéristiques d'un ensemble de minuties correspondant à une empreinte digitale. Ce procédé comprend les étapes suivantes :

- estimer des informations supplémentaires sur ladite empreinte digitale à partir des caractéristiques dudit ensemble de minuties et avec un niveau de confiance donné ;

- déterminer des descripteurs locaux autour de certaines au moins des minuties dudit ensemble de minuties, de façon que les descripteurs locaux comprennent, relativement à des zones comportant des informations supplémentaires estimées avec le niveau de confiance donné, des valeurs calculées à partir desdites informations et, relativement à des zones ne comportant pas d'informations supplémentaires estimées avec le niveau de confiance donné, des effacements ;

- quantifier les descripteurs locaux déterminés selon un nombre donné de valeurs entières, une valeur étant réservée aux effacements ;

- coder les descripteurs locaux quantifiés à l'aide d'un algorithme de codage tolérant des erreurs et associé à un algorithme de décodage agencé pour tenir compte des erreurs et des effacements au sein des descripteurs locaux quantifiés codés ; et

- déterminer une pseudo-identité à partir de certains au moins des descripteurs locaux quantifiés codés.

En partant de caractéristiques de minuties, plutôt que d'une image déjà constituée de l'empreinte, ce procédé est compatible avec une utilisation en relation avec la plupart des bases de données biométriques actuelles.

De plus, en faisant intervenir un niveau de confiance dans l'estimation d'informations supplémentaires, il permet de construire une pseudo-identité à partir de données plus fiables, et permet ainsi d'atteindre une meilleure efficacité dans une éventuelle phase ultérieure de vérification (c'est-à-dire de comparaison entre deux pseudo-identités).

L'utilisation d'effacements dans les zones jugées de trop faible qualité permet aussi d'améliorer les performances d'une éventuelle phase ultérieure de vérification.

De plus, le codage des descripteurs locaux quantifiés à l'aide d'un algorithme de codage tolérant des erreurs s'apparente à une opération de diversification qui permet finalement d'obtenir une pseudo-identité plutôt qu'un identifiant fixe comme dans l'art antérieur cité en introduction.

En effet, les algorithmes de codage et de décodage permettent d'associer un même mot de code à deux ensembles de descripteurs locaux quantifiés légèrement différents mais se rapportant à une même empreinte digitale.

Mais l'algorithme de codage peut également permettre d'associer deux mots de code distincts à deux ensembles de descripteurs locaux quantifiés se rapportant à une même empreinte digitale. Il en résulte alors deux pseudo-identités distinctes relatives au même individu (ce qui peut être vu comme un identifiant variable dudit individu). Cette diversification peut s'avérer utile, par exemple pour empêcher un tiers ayant accès aux deux pseudo-identités d'établir un lien entre elles ou pour d'autres raisons.

A titre d'exemple non limitatif, on peut imaginer obtenir, à partir de caractéristiques d'un unique ensemble de minuties correspondant à l'empreinte digitale d'un individu donné, une première pseudo-identité pour un usage dans le cadre d'une première application et une deuxième pseudo-identité, distincte de la première, pour un usage dans le cadre d'une deuxième application. L'usage en question peut par exemple consister pour ledit individu à être enregistré suivant sa première pseudo-identité dans la première application et suivant sa deuxième pseudo-identité dans la deuxième application. On évite ainsi que des recoupements d'identité puissent être faits entre les deux applications.

Des utilisations, autres qu'une identification variant selon les applications telle mentionnée ci-dessus, et d'autres avantages de la pseudo-identité peuvent aussi être envisagés, comme cela apparaîtra à l'homme du métier.

Selon des modes de réalisation avantageux qui peuvent être combinés de toutes les manières envisageables :

- les informations supplémentaires estimées sont relatives à des orientations en différents points de l'empreinte digitale ;

- les informations supplémentaires estimées sont relatives à une forme des lignes de crêtes de l'empreinte digitale ;

- la détermination des descripteurs locaux autour de certaines au moins des minuties dudit ensemble de minuties est telle que les descripteurs locaux comprennent, relativement aux zones comportant une quantité d'informations supplémentaires estimées avec le niveau de confiance donné, supérieure à un seuil, des valeurs calculées à partir desdites informations, et, relativement aux zones comportant une quantité d'informations supplémentaires estimées avec le niveau de confiance donné, inférieure audit seuil, des effacements ;

- on estime en outre des niveaux de qualité associés respectivement auxdites informations supplémentaires, et les descripteurs locaux comprennent, relativement à des zones comportant des informations supplémentaires estimées avec le niveau de confiance donné, des valeurs calculées à partir desdites informations en tenant compte des niveaux de qualité estimés ;

- la détermination des descripteurs locaux est telle que les descripteurs locaux sont invariants par rotation de l'empreinte digitale ; et/ou

- la détermination des descripteurs locaux comprend la détermination de zones autour de certaines au moins des minuties dudit ensemble de minuties et l'application de filtres respectifs dans les zones déterminées.

Selon un autre aspect de l'invention, il est proposé un dispositif comprenant des moyens adaptés pour la mise en oeuvre du procédé susmentionné. Ce dispositif comprend :

- une unité pour estimer des informations supplémentaires sur ladite empreinte digitale à partir des caractéristiques dudit ensemble de minuties et avec un niveau de confiance donné ;

- une unité pour déterminer des descripteurs locaux autour de certaines au moins des minuties dudit ensemble de minuties, de façon que les descripteurs locaux comprennent, relativement à des zones comportant des informations supplémentaires estimées avec le niveau de confiance donné, des valeurs calculées à partir desdites informations et, relativement à des zones ne comportant pas d'informations supplémentaires estimées avec le niveau de confiance donné, des effacements ;

- une unité pour quantifier les descripteurs locaux déterminés selon un nombre donné de valeurs entières, une valeur étant réservée aux effacements ;

- une unité pour coder les descripteurs locaux quantifiés à l'aide d'un algorithme de codage tolérant des erreurs et associé à un algorithme de décodage agencé pour tenir compte des erreurs et des effacements au sein des descripteurs locaux quantifiés codés ; et

- une unité pour déterminer une pseudo-identité à partir de certains au moins des descripteurs locaux quantifiés codés.

Selon un autre aspect de l'invention, il est proposé un produit programme d'ordinateur adapté pour la mise en oeuvre du procédé susmentionné.

Ce produit programme d'ordinateur comprend des instructions de code pour mettre en oeuvre les étapes suivantes lorsqu'il est chargé et exécuté sur des moyens informatiques :

- estimer des informations supplémentaires sur ladite empreinte digitale à partir des caractéristiques dudit ensemble de minuties et avec un niveau de confiance donné ;

- déterminer des descripteurs locaux autour de certaines au moins des minuties dudit ensemble de minuties, de façon que les descripteurs locaux comprennent, relativement à des zones comportant des informations supplémentaires estimées avec le niveau de confiance donné, des valeurs calculées à partir desdites informations et, relativement à des zones ne comportant pas d'informations supplémentaires estimées avec le niveau de confiance donné, des effacements ;

- quantifier les descripteurs locaux déterminés selon un nombre donné de valeurs entières, une valeur étant réservée aux effacements ;

- coder les descripteurs locaux quantifiés à l'aide d'un algorithme de codage tolérant des erreurs et associé à un algorithme de décodage agencé pour tenir compte des erreurs et des effacements au sein des descripteurs locaux quantifiés codés ; et

- déterminer une pseudo-identité à partir de certains au moins des descripteurs locaux quantifiés codés.

Selon un autre aspect de l'invention, il est proposé une utilisation de la pseudo-identité déterminée selon le procédé susmentionné dans des procédés mettant en oeuvre des algorithmes cryptographiques.

D'autres particularités et avantages de la présente invention apparaîtront dans la description ci-après d'exemples de réalisation non limitatifs, en référence aux dessins annexés, dans lesquels :

- la figure 1 illustre la construction d'une carte d'orientations à partir de caractéristiques de minuties ;
- la figure 2 illustre une étape de reconstruction des lignes de crêtes d'une empreinte à partir de caractéristiques de minuties ; et
- la figure 3 illustre une reconstruction partielle, avec un niveau de confiance donné, d'une image d'empreinte.

Aux fins de la détermination d'une pseudo-identité selon l'invention, on dispose initialement uniquement de caractéristiques d'un ensemble de minuties correspondant à une empreinte digitale. Cet ensemble regroupe ainsi typiquement l'ensemble des accidents existant sur les lignes de crêtes de cette empreinte, tels que les fins de crêtes et les bifurcations.

Dans le contexte de la présente invention, on notera que l'expression « empreinte digitale » vise classiquement une empreinte biométrique d'un doigt de la main, mais également toute empreinte biométrique similaire, telle qu'une empreinte d'un doigt de pied, une empreinte d'une partie d'une paume d'une main, etc.

Les caractéristiques de l'ensemble de minuties dont on dispose peuvent être diverses. Elles peuvent par exemple comprendre, pour chaque minutie de l'ensemble, son type (e.g. fin de crête, bifurcation, autre), ses coordonnées dans un repère par exemple cartésien et/ou son orientation qui peut se définir par exemple par la direction (et éventuellement le sens) de la tangente à une ligne de crête au niveau de cette minutie.

Avantageusement, les caractéristiques de l'ensemble de minuties considéré sont conformes au format spécifié par le standard ISO/IEC 19794-2 :2005 susmentionné. Elles correspondent ainsi aux informations disponibles dans un grand nombre des bases de données biométriques utilisées actuellement.

Bien sûr, d'autres caractéristiques ou d'autres formats pourraient être utilisés pour décrire l'ensemble de minuties considéré.

On notera cependant qu'à ce stade, seules ces caractéristiques de l'ensemble de minuties sont disponibles. La forme des lignes de crêtes ou d'autres caractéristiques de l'empreinte digitale correspondante ne sont pas connues. L'image de toute ou partie de l'empreinte digitale n'est pas non plus disponible.

Des informations supplémentaires sur l'empreinte digitale sont ensuite estimées à partir des caractéristiques de l'ensemble de minuties.

Ces informations supplémentaires peuvent être de différents types. Elles peuvent par exemple être relatives à des orientations en différents points de l'empreinte digitale, typiquement autour des minuties. On peut alors obtenir une carte d'orientations.

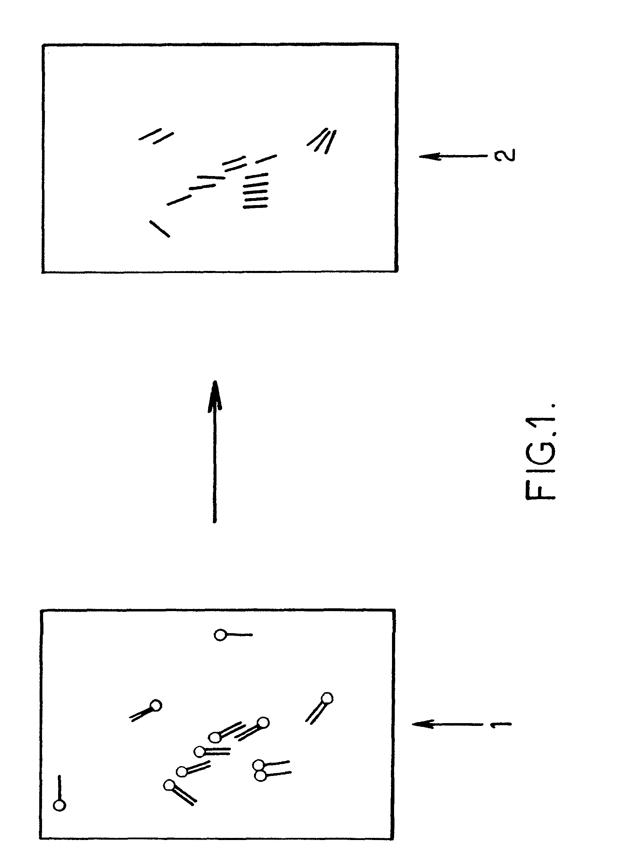

Ce principe est illustré sur la figure 1 où le schéma 1 donne un exemple de représentation des minuties de l'ensemble considéré, à partir des caractéristiques dont on dispose.

Sur ce schéma, chaque minutie est représentée à l'aide d'un cercle qui indique son emplacement au sein de l'empreinte digitale qu'elle participe à décrire, cet emplacement étant par exemple déduit des coordonnées cartésiennes connues de ladite minutie. Elle comprend en outre une queue qui indique la direction et le sens connus d'une ligne de crête dont ladite minutie représente un accident. Dans cet exemple, une queue simple illustre une minutie de type fin de ligne de crête, tandis qu'une queue double illustre une minutie de type bifurcation. Bien sûr, cette représentation n'est qu'un exemple non limitatif sans aucune implication sur la suite de la description.

Le schéma 2 montre une carte d'orientations indiquant les directions en différents points de l'empreinte digitale. Certaines de ces directions sont directement issues des directions connues des minuties, telles qu'elles apparaissent sur la figure 1. D'autres directions, quant à elles, peuvent être déduites des caractéristiques connues de l'ensemble de minuties, par exemple à l'aide d'un algorithme approprié.

Un exemple d'un tel algorithme est décrit dans l'article de R. Cappelli, A. Lumini, D. Maio, D. Maltoni, « Fingerprint Image Reconstruction from Standard Templates », IEEE Transactions on pattern analysis and machine intelligence, vol. 29, N°9, de septembre 2007, notamment au paragraphe 4.2.

En variante, les informations supplémentaires sur l'empreinte digitale estimées à partir des caractéristiques de l'ensemble de minuties peuvent être relatives à une forme des lignes de crêtes de l'empreinte digitale. On est alors dans un cas de reconstruction de l'empreinte digitale.

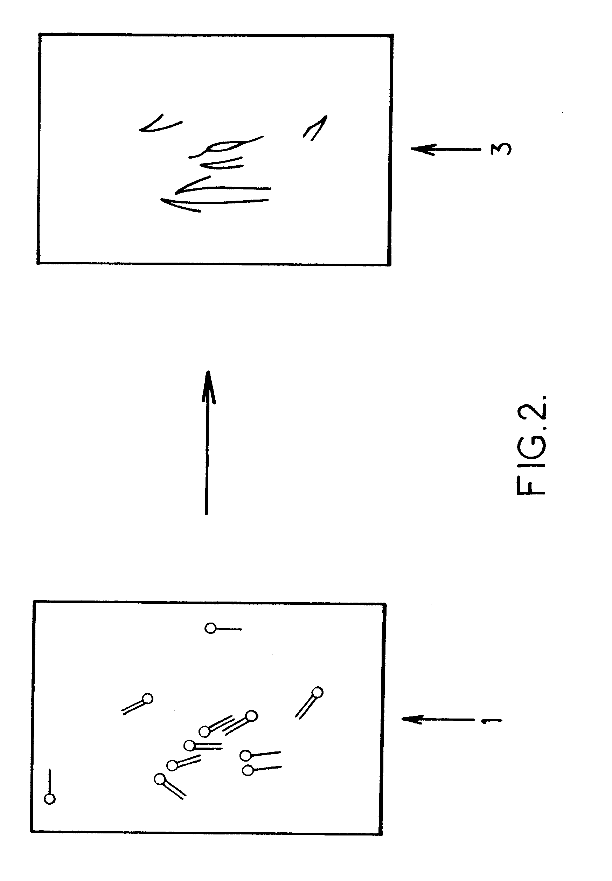

Ce principe est illustré sur la figure 2, où le schéma 1 représentant l'ensemble de minuties est identique à celui de la figure 1, et où le schéma 3 comporte un certain niveau de reconstruction de l'empreinte digitale en faisant apparaître des portions de certaines de ses lignes de crêtes.

La reconstruction de l'empreinte digitale peut s'effectuer par exemple à l'aide de l'algorithme itératif décrit dans l'article « Fingerprint Image Reconstruction from Standard Templates » susmentionné, notamment au paragraphe 4.3.

Dans tous les cas, et contrairement aux algorithmes de l'art antérieur, l'estimation des informations supplémentaires sur l'empreinte digitale à partir des caractéristiques de l'ensemble de minuties est réalisé avec un niveau de confiance donné. Ceci signifie que seules les informations supplémentaires qui présentent un certain niveau de qualité sont estimées.

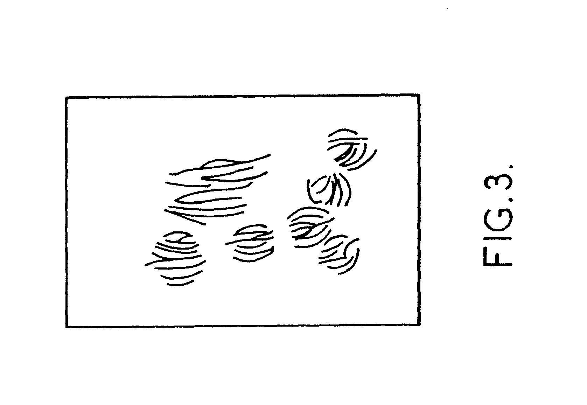

Par exemple, lorsque l'estimation de ces informations supplémentaires consiste en une reconstruction de l'empreinte digitale, celle-ci n'est que partielle. Les formes des lignes de crête qui ne pourraient être estimées qu'avec un niveau de confiance trop faible (car inférieur au niveau de confiance donné) ne sont pas reconstruites. On obtient ainsi une image du type représenté sur la figure 3, où certaines zones font apparaître des lignes de crêtes reconstruites avec le niveau de confiance souhaité, tandis que les autres zones restent vides. La taille des zones reconstruites autour des minuties dépend du niveau de confiance choisi.

Pour ce faire, au cours de la reconstruction de l'empreinte digitale, on peut estimer des niveaux de qualité associés respectivement aux informations supplémentaires. Cette estimation peut par exemple tenir compte des positions relatives des minuties (une forte concentration de minuties permettant généralement d'obtenir des informations supplémentaires de bonne qualité), des positions des minuties au sein de l'empreinte digitale (la fiabilité des caractéristiques des minuties disponibles peut être moindre en bordure de l'empreinte digitale par exemple), etc.

Une analyse des niveaux de qualité estimés permet alors de ne retenir que les informations supplémentaires ayant des niveaux de qualité respectant le niveau de confiance donné.

Le niveau de confiance peut être fixé en fonction de différents critères, tels que l'application envisagée. Il peut par exemple résulter d'un compromis entre la quantité d'informations supplémentaires souhaitée et le niveau de fiabilité souhaité pour ces informations supplémentaires.

Plusieurs niveaux de confiance peuvent d'ailleurs être utilisés pour obtenir des jeux d'informations supplémentaires respectifs.

En n'estimant que certaines informations supplémentaires sur l'empreinte digitale, par exemple en ne reconstruisant que partiellement les formes des lignes de crêtes de cette image, on garantit une certaine qualité des informations estimées et on réduit la charge de calcul et donc le temps nécessaire à cette phase.

Les informations supplémentaires estimées sont ensuite utilisées pour déterminer des descripteurs locaux autour de certaines au moins des minuties de l'ensemble considéré.

Dans les zones de l'empreinte digitale où des informations supplémentaires ont été estimées avec le niveau de confiance donné, les descripteurs locaux sont calculés à partir de ces informations. Différents types de calcul sont envisageables, en fonction notamment de la nature des informations supplémentaires préalablement estimées.

A titre d'exemple, lorsque les informations supplémentaires sont relatives à des orientations en différents points de l'empreinte digitale, les descripteurs locaux peuvent être obtenus par calcul de moyennes des orientations dans des zones locales prédéfinies autour des minuties, ainsi éventuellement que de déviations par rapport à ces moyennes.

Selon un autre exemple, lorsque les informations supplémentaires sont relatives à des orientations en différents points de l'empreinte digitale, les descripteurs locaux peuvent être obtenus par détermination de zones autour de certaines au moins des minuties et application de filtres respectifs dans les zones déterminées.

Cette définition de zones et l'application consécutive de filtres locaux peut s'effectuer par exemple selon les principes décrits dans l'article « Fingerprint matching from minutiae texture maps » cité en introduction, ou encore dans l'article de A. K. Jain, S. Prabhakar, L. Hong, S. Pankanti, « FingerCode: a filterbank for fingerprint représentation and matching », Proc. IEEE Computer Society, Conf. Computer Vision and Pattern Recognition (CVPR), vol. 2, pp. 187-193, 1999.

A titre illustratif, un cercle peut ainsi être défini autour de certaines au moins des minuties de l'ensemble considéré. Puis un découpage de ce cercle en cercles concentriques d'une part et en secteurs d'autre part permet d'obtenir une pluralité de zones autour de chacune de ces minuties. Des filtres de Gabor peuvent ensuite être appliqués dans chacune de ces zones de façon à caractériser les informations supplémentaires au sein de ces zones. On obtient ainsi, pour chaque minutie, un vecteur ayant un nombre de composantes égales au nombre de zones déterminées et de filtres appliqués.

Bien sûr, de nombreuses variantes de cet exemple illustratif peuvent être envisagées comme cela apparaîtra à l'homme du métier. En particulier, la forme et/ou la taille des zones déterminées, ou encore la nature des filtres appliqués peuvent varier selon les besoins. Il n'est par exemple pas exclu que certaines des zones déterminées présentent des recoupements entre elles.

Avantageusement, la détermination des descripteurs locaux est telle que ces descripteurs sont invariants par rotation de l'empreinte digitale. A cet effet, on peut par exemple tenir compte de l'orientation des minuties dans cette détermination. Ainsi, lorsqu'on utilise le mode de détermination décrit ci-dessus, la détermination des zones entourant une minutie peut être faite par référence à la direction connue de cette minutie. On obtient de cette façon un repère pour aligner les descripteurs locaux autour de cette minutie.

La même robustesse face à des transformations géométriques qui pourraient impacter l'empreinte digitale que dans l'art antérieur cité en introduction peut ainsi être obtenue.

De façon avantageuse, lorsque des niveaux de qualité ont été estimés comme cela a été expliqué plus haut, la détermination des descripteurs locaux peut les prendre en compte. Ainsi, les descripteurs locaux comprennent, relativement à des zones comportant des informations supplémentaires estimées avec le niveau de confiance donné, des valeurs calculées à partir desdites informations en tenant compte des niveaux de qualité estimés. Une pondération des valeurs calculées à partir desdites informations par une fonction des niveaux de qualité estimés est par exemple envisageable.

De cette façon, une vérification biométrique ultérieure peut être améliorée en considérant deux pseudo-identités identiques lorsque leurs composantes les plus fiables sont identiques ou proches.

Dans des zones de l'empreinte digitale ne comportant pas d'informations supplémentaires estimées avec le niveau de confiance donné, les descripteurs locaux sont déterminés pour comprendre des effacements.

On rappelle que les effacements (« erasures » en anglais) sont une notion utilisée dans le codage/décodage d'informations. Un effacement peut être défini comme une (ou plusieurs) valeur(s) numérique(s), distincte(s) des autres valeurs utilisées dans le codage et typiquement utilisée(s) pour une information dont on ne sait pas avec exactitude quelle autre valeur devrait lui être affectée.

Un effacement est traité d'une façon spécifique par un algorithme de décodage approprié. Un exemple d'un tel algorithme sera donné plus bas. L'utilisation d'effacements permet d'obtenir de meilleurs résultats que si on considérait les informations correspondantes comme des erreurs.

L'intérêt de l'utilisation d'effacements dans la détermination des descripteurs locaux apparaîtra plus clairement plus bas.

A ce stade, on notera que le nombre d'effacements au sein des descripteurs locaux sera d'autant plus grand que le niveau de confiance choisi pour estimer les informations supplémentaires est élevé.

Avantageusement, les descripteurs locaux peuvent également comprendre des effacements dans certaines zones comportant des informations supplémentaires estimées avec le niveau de confiance donné. Ce peut être le cas, par exemple, relativement à des zones de l'empreinte digitale où la quantité d'informations supplémentaires estimées avec le niveau de confiance donné est inférieure à un seuil. Seules les zones de l'empreinte digitale où la quantité d'informations supplémentaires estimées avec le niveau de confiance donné est supérieure à ce seuil se voient alors affecter des valeurs calculées à partir desdites informations.

On évite ainsi de fonder des descripteurs locaux sur la base d'une quantité d'informations insuffisante et donc potentiellement peu fiables.

Une quantification des descripteurs locaux selon un nombre donné de valeurs entières peut alors être opérée. On obtient ainsi un format commun pour l'ensemble des descripteurs locaux déterminés. Dans cette quantification, une valeur est réservée aux effacements. Plus d'une valeur pourraient aussi être réservées pour cet usage.

Les descripteurs locaux quantifiés peuvent ainsi prendre la forme de vecteurs q-aires, où au moins une $(q+1)^{\text{ème}}$ valeur est réservée aux effacements. A titre d'exemple, lorsque q=2, ces vecteurs sont binaires et leurs composantes peuvent prendre les valeurs 0 ou 1, ou bien encore la valeur supplémentaire ε pour les effacements.

Un exemple de quantification pouvant être mise en oeuvre est la méthode de binarisation décrite dans la thèse de A. W. K. Kong, « Palmprint Identication Based on Generalization of IrisCode », PhD Thesis, University of Waterloo, Ontario, Canada, 2007, notamment au paragraphe 5.3.2. Bien sûr, d'autres méthodes sont également envisageables, comme cela apparaîtra à l'homme du métier.

Les descripteurs locaux ainsi quantifiés sont alors codés à l'aide d'un algorithme de codage tolérant des erreurs et associé à un algorithme de décodage agencé pour tenir compte des erreurs et des effacements au sein des descripteurs locaux quantifiés codés.

Un codage selon le schéma décrit dans l'article de A. Juels, M. Wattenberg, « A fuzzy Commitment Scheme », ACM Conference on Computer and Communications Security, 1999, paraît bien adapté à cette fin, bien que d'autres codages soient également envisageables, comme cela apparaîtra à l'homme du métier.

En utilisant les principes de cet article, un codage correcteur d'erreur peut être appliqué aux descripteurs locaux quantifiés.

On rappelle qu'il existe une multitude de codes correcteurs d'erreurs dont la caractéristique commune est de générer un mot à partir d'une information initiale en y introduisant de la redondance. Par exemple, pour une information initiale i, le mot généré peut être écrit c=f(i), où f est une fonction publique relative à un code correcteur d'erreurs donné. Une personne connaissant le code correcteur d'erreurs utilisé peut alors retrouver l'information i à partir du mot c et de la fonction inverse de f, soit i=f⁻¹(c).

Puis une fonction de hachage (par exemple SHA-1, MD5, RIPE-MD, HAVAL, SNERFU, etc.) peut être appliquée au résultat de l'opération précédente, de façon à obtenir un condensé à partir duquel il n'est pas possible de retrouver de façon certaine la valeur des descripteurs locaux quantifiés.

Une pseudo-identité peut alors être déterminée à partir de certains au moins des descripteurs locaux quantifiés codés. Elle peut consister en une simple concaténation des descripteurs locaux quantifiés codés. En variante, des traitements supplémentaires peuvent être appliqués aux descripteurs locaux quantifiés codés pour définir la pseudo-identité. Une telle pseudo-identité peut être utilisée pour caractériser l'individu auquel appartient l'empreinte digitale qui correspond auxdites caractéristiques de l'ensemble de minuties considéré.

La détermination d'une pseudo-identité telle qu'elle vient d'être décrite peut être utilisée dans une phase d'enrôlement d'un individu par exemple.

Lors d'une éventuelle phase de vérification, une deuxième pseudo-identité relative à un individu peut être calculée et comparée à la pseudo-identité issue de l'enrôlement.

La comparaison peut se faire de différentes manières, selon le format des pseudo-identités. A titre d'exemple, une distance entre les deux pseudo-identités peut être calculée puis comparée à un seuil en-deçà duquel on considère que les pseudo-identités concernent un même individu.

Les descripteurs locaux quantifiés à partir desquels les pseudo-identités sont déterminées ayant été codés, la phase de vérification utilise l'algorithme de décodage associé à l'algorithme de codage mentionné plus haut. Cet algorithme de décodage est agencé pour tenir compte des erreurs et des effacements au sein des descripteurs locaux quantifiés codés.

L'algorithme de décodage décrit dans l'article de Fitzpatrick, « Errors-And-Erasures Decoding of BCH Codes » de janvier 1998 peut par exemple être utilisé, bien que d'autres algorithmes soient également envisageables, comme cela apparaîtra à l'homme du métier.

En tirant partie des effacements, l'algorithme de décodage permet une vérification particulièrement efficace. La vérification est notamment plus efficace que si les informations de faible qualité et/ou en quantité insuffisante étaient traitées de la même façon que les informations fiables, ou comme des erreurs. On considère en effet qu'au cours du décodage, un effacement est deux fois plus facile à corriger qu'une erreur.

Par ailleurs, une pseudo-identité déterminée selon les principes décrits plus haut peut être utilisée dans des procédés mettant en oeuvre des algorithmes cryptographiques, tels que des algorithmes de chiffrement et/ou des algorithmes d'authentification ou d'identification.

Selon l'invention, un produit programme d'ordinateur peut permettre, lorsqu'il est chargé et exécuté sur des moyens informatiques, de mettre en oeuvre tout ou partie des étapes décrites plus haut, au moyen d'instructions de code appropriées.

Toujours selon l'invention, un dispositif comprenant des unités matérielles et/ou logicielles appropriées peut également permettre la mise en oeuvre de tout ou partie des étapes décrites plus haut.

Un exemple avantageux de réalisation pour la détermination d'une pseudo-identité va désormais être plus particulièrement décrit, à titre illustratif et non limitatif.

Dans cet exemple de réalisation, on dispose initialement, pour chaque minutie mi d'un ensemble de minuties (m1,...,mt) correspondant à une empreinte digitale, des caractéristiques suivantes : ses coordonnées (xi,yi), son orientation θi et son type (bifurcation ou fin de ligne de crête). On dispose en outre de la taille de l'image de l'empreinte digitale à laquelle l'ensemble de minuties se rapporte.

Une estimation d'informations supplémentaires sur ladite empreinte digitale à partir des caractéristiques de l'ensemble de minuties est ensuite effectuée en reprenant les principes décrits dans l'article « Fingerprint Image Reconstruction from Standard Templates » mentionné plus haut.

Ces principes comportent notamment les trois étapes suivantes :

1. Une estimation des limites extérieures de l'empreinte, suivant une modélisation de formes d'empreintes.

2. Une estimation du champ d'orientation des lignes de crêtes, en utilisant plusieurs modèles d'orientation (différents cas selon la classe de forme : boucles, arches, etc.). Le champ d'orientation est optimisé de manière itérative en minimisant la différence entre l'orientation connue des minuties et l'orientation estimée. Pour une position (x,y) sur l'image, l'orientation estimée est notée $\Phi x,y$.

3. Une reconstruction des lignes de crêtes.

La quatrième étape de finition décrite dans l'article « Fingerprint Image Reconstruction from Standard Templates » n'a pas besoin d'être reprise dans le présent exemple de réalisation, car ici le but n'est pas d'obtenir une image d'empreinte proche de la réalité.

De plus, dans le présent exemple de réalisation, les étapes 2 et 3 mentionnées ci-dessus sont un peu modifiées par rapport à l'enseignement de l'article « Fingerprint Image Reconstruction from Standard Templates ».

A la fin de l'étape 2 tout d'abord, une première mesure de qualité est effectuée. Pour chaque minutie mi, on calcule l'écart $\Delta i$ entre son angle réel θi et l'angle estimé $\Phi xi,yi$. Ce paramètre servira à estimer la fiabilité de la zone entourant une minutie.

En ce qui concerne, l'étape 3 susmentionnée, elle est modifiée comme suit dans le présent exemple de réalisation.

Pour démarrer, une hypothèse de valeur, choisie suivant le contexte, est prise sur la fréquence ν des lignes de crêtes dans l'empreinte d'origine. Cette fréquence peut être vue comme le nombre de lignes de crêtes dans une zone donnée, ce qui permet de représenter l'écartement moyen entre deux lignes de crêtes.

Deux petites images prototypes, par exemple en noir et blanc, sont construites en fonction de ν pour représenter une bifurcation ou une fin de ligne de crête (ces images prototypes peuvent être similaires à celles qui apparaissent aux figures 6 et 13 de l'article « Fingerprint Image Reconstruction from Standard Templates »).

L'initialisation de l'image se fait en positionnant ces images prototypes aux emplacements des minuties mi, en respectant le type de chacune des minuties de l'ensemble, et en suivant l'orientation qui a été estimée lors de l'étape 2.

Ensuite, la reconstruction se fait de manière itérative en appliquant des filtres de Gabor réels pour faire grossir progressivement l'image autour d'une minutie. Un filtre de Gabor est défini par une fonction :

$$G_{\theta,\nu,\sigma} : (x,y) \mapsto e^{-\frac{(x+y)^2}{2\sigma^2}} \cos(2\pi\nu x') \qquad (1)$$

où x' = x sin θ + y cos θ, σ correspond à une déviation standard qui est fixée en fonction de la fréquence ν, et θ correspond à l'orientation du filtre.

Pour l'application d'un tel filtre en un point (x,y) de l'image, l'orientation θ est celle qui a été estimée à l'étape 2, c'est-à-dire $\Phi x,y$. Le calcul de la nouvelle valeur se fait via un produit de corrélation dans une fenêtre d'information de largeur et hauteur T.

Si on note $I_0$ l'image qui a été initialisée avec les prototypes positionnés sur les minuties de l'empreinte, la valeur calculée $I_j(x,y)$ de l'image en (x,y) à l'étape j≥1 peut s'écrire :

$$I_j(x,y) = \sum_{-T/2 \leq \delta x, \delta y \leq T/2} I_{j-1}(x+\delta x, y+\delta y) \times G_{\Phi x,y,\nu,\sigma}(\delta x, \delta y) \qquad (2).$$

Une telle expression fait apparaître le fait qu'après chaque itération, les zones reconstruites grossissent (dans chaque direction, environ +2T en largeur et en hauteur).

Contrairement à l'enseignement de l'article « Fingerprint Image Reconstruction from Standard Templates » selon lequel la reconstruction est itérée jusqu'à ce que toute l'image soit reconstruite (i.e. pour remplir la zone de l'empreinte estimée dans l'étape 1), seule une reconstruction partielle permettant une bonne estimation des orientations locales est réalisée ici. De plus, la qualité de la reconstruction est estimée à chaque étape.

Pour cela, lors de l'initialisation de $I_0$, tout ce qui se situe hors des prototypes est considéré comme effacé : on attribue un effacement, noté $\varepsilon$, à $I_0(x,y)$ si la position $(x,y)$ n'est pas dans l'image d'un des prototypes placés sur les minuties.

En conséquence, la sommation dans l'expression (2) est modifiée de façon à n'inclure que les valeurs de $I_{j-1}$ qui ne sont pas des effacements.

On considère également trois paramètres supplémentaires : un seuil de décision $\tau$ pour attribuer une valeur, un seuil $\eta$ pour déclarer un effacement et la description D de la forme de la fenêtre de codage qui sera détaillée plus loin (en pratique, cela peut être un rayon si la fenêtre est un disque).

En plus de la restriction de la sommation dans l'équation (2), une dernière étape est effectuée pour évaluer $I_j(x,y)$. Le résultat de la sommation, noté ici $\sum x,y$, est comparé au seuil $\tau$.

Si la valeur $\sum x,y$ est supérieure à $\tau$, alors on pose $I_j(x,y) = B$ (B pour Blanc, par exemple 255 en RGB). Si elle inférieure à $\tau$, on pose $I_j(x,y) = N$ (N pour Noir). En cas d'égalité avec $\tau$, on considère que la position est effacée, c'est-à-dire qu'on lui attribue la valeur $\varepsilon$. De plus, dans les deux premiers cas (non égalité entre $\sum x,y$ et $\tau$), un coût de décision $\Delta r(x,y)$ est calculé comme la différence entre $\sum x,y$ et $\tau$. Cette grandeur $\Delta r(x,y)$ représente le coût pour passer à la valeur B ou N.

A chaque position $(x,y)$ dans l'image à reconstruire partiellement, on associe une note de qualité (ou plus exactement de non-qualité) $q(x,y)$ qui va être mise à jour à chaque itération selon différents critères. Cette note est calculée via une fonction de coût k à valeurs réelles.

Tant que la position est considérée comme effacée (valeur $\varepsilon$), la note est nulle. Si à l'itération j, la position change de statut (i.e. prend une valeur différente de $\varepsilon$), j est appelé l'indice d'apparition de $(x,y)$. Cet indice d'apparition sera utilisé pour refléter le coût de passage de la valeur $\varepsilon$ à une valeur non effacée : $q(x,y)$ correspondra à l'évaluation d'un coût calculé via k en les entrées j et $\Delta r(x,y)$. Lors d'une future itération, la qualité est mise à jour à partir de la nouvelle estimation de $\Delta r(x,y)$ (mais en conservant l'indice d'apparition).

A noter qu'à $\Delta r(x,y)$ constant, la note de qualité est strictement croissante avec j. Ceci implique que plus la position apparaît tardivement, plus la qualité est considérée comme faible. Mais ce n'est plus le cas à $\Delta r(x,y)$ variable.

Les itérations sont effectuées jusqu'à ce que :

- soit, autour de chaque minutie mi, toutes les positions sous la fenêtre décrite par D centrée sur mi aient déjà été reconstruites,

- soit toutes les positions restant à construire sous une telle fenêtre aient une note de qualité nécessairement supérieure au seuil.

Après l'arrêt des itérations, l'image partielle est notée A et toutes les positions $(x,y)$ de A dont la (non-)qualité est supérieure à $\eta$ sont déclarées comme effacées, c'est-à-dire que $A(x,y)$ prend la valeur $\varepsilon$.

La détermination de descripteurs locaux autour des minuties, selon le présent exemple de réalisation, peut se dérouler comme suit.

A partir de l'image partielle reconstruite, on applique une série de filtres locaux autour de chaque minutie, en utilisant l'orientation de ladite minutie pour obtenir un repère absolu, ce qui conduit à la construction de vecteurs caractéristiques.

Les filtres utilisés sont par exemple du type décrit dans l'un des articles « Fingerprint matching from minutiae texture maps » et « FingerCode: a filterbank for fingerprint representation and matching » mentionnés plus haut, la fenêtre de codage décrite par D étant alors un disque.

Toutefois, la construction de ces vecteurs caractéristiques se fait ici en tenant compte des qualités mesurées dans l'étape de reconstruction et des effacements.

Par exemple, suivant le principe décrit dans l'article « Fingerprint matching from minutiae texture maps », on découpe un disque centré autour d'une minutie mi en plusieurs zones et, dans chaque zone, on applique des filtres de Gabor, par exemple selon 8 orientations prédéfinies $\alpha 1,...,\alpha 8$ en considérant l'orientation de mi comme origine, et en utilisant une formule du type de l'expression (2) pour appliquer les filtres.

A chaque zone est ensuite associée une valeur pour chacune des 8 orientations $\alpha$, en calculant une déviation absolue moyenne AAD (Average Absolute Deviation from the mean) à partir de toutes les valeurs calculées dans cette zone pour une même orientation $\alpha$.

On restreint cependant la sommation aux positions non effacées et on utilise également les notes de qualité pour pondérer les différentes valeurs. Le calcul pour la minutie mi fait intervenir les valeurs

$$B(x, y) = \sum_{-T/2 \leq \delta x, \delta y \leq T/2, \text{ si } A(x+\delta x, y+\delta y) \neq \varepsilon} \frac{A(x + \delta x, y + \delta y)}{h(q(x + \delta x, y + \delta y), \Delta i)} \times G_{\theta i + \alpha, \nu, \sigma}(\delta x, \delta y) \qquad (3)$$

où A est l'image partielle reconstruite à l'étape précédente et h une fonction croissante.

On introduit de plus un nouveau paramètre K qui permet d'effacer une zone si le nombre de positions effacées dans cette zone est supérieur ou égal à K.

Les descripteurs locaux ainsi déterminés sont ensuite quantifiés, par exemple en vecteurs binaires. La technique décrite dans la thèse « Palmprint Identication Based on Generalization of IrisCode » mentionnée plus haut peut être utilisée à cet effet.

Les effacements sont toutefois directement repris des descripteurs locaux non quantifiés.

Le codage des vecteurs quantifiés peut utiliser le schéma décrit dans l'article « A fuzzy Commitment Scheme » susmentionné, de façon à pouvoir corriger les différences entre deux prises.

On choisit cependant un code correcteur d'erreurs associé à un algorithme de décodage permettant de tenir compte simultanément des effacements et des erreurs, tel que celui décrit dans l'article « Errors-And-Erasures Decoding of BCH Codes » susmentionné.

Une pseudo-identité peut enfin être construite à partir des vecteurs codés.

On rappelle que l'exemple de réalisation qui vient d'être décrit ne limite en rien les principes généraux de l'invention introduits plus haut. Par exemple, certaines des opérations faisant partie de cet exemple pourraient en effet n'être pas mises en oeuvre, ou bien être remplacées par d'autres opérations.

## Revendications

1.  Procédé de détermination d'une pseudo-identité à partir de caractéristiques d'un ensemble de minuties correspondant à une empreinte digitale, comprenant les étapes suivantes :

    - estimer des informations supplémentaires sur ladite empreinte digitale à partir des caractéristiques dudit ensemble de minuties et avec un niveau de confiance donné ;
    - déterminer des descripteurs locaux autour de certaines au moins des minuties dudit ensemble de minuties, de façon que les descripteurs locaux comprennent, relativement à des zones comportant des informations supplémentaires estimées avec le niveau de confiance donné, des valeurs calculées à partir desdites informations et, relativement à des zones ne comportant pas d'informations supplémentaires estimées avec le niveau de confiance donné, des effacements ;
    - quantifier les descripteurs locaux déterminés selon un nombre donné de valeurs entières, une valeur étant réservée aux effacements ;
    - coder les descripteurs locaux quantifiés à l'aide d'un algorithme de codage tolérant des erreurs et associé à un algorithme de décodage agencé pour tenir compte des erreurs et des effacements au sein des descripteurs locaux quantifiés codés ; et
    - déterminer une pseudo-identité à partir de certains au moins des descripteurs locaux quantifiés codés.

2.  Procédé selon la revendication 1, dans lequel les informations supplémentaires estimées sont relatives à des orientations en différents points de l'empreinte digitale.

3.  Procédé selon la revendication 1 ou 2, dans lequel les informations supplémentaires estimées sont relatives à une forme des lignes de crêtes de l'empreinte digitale.

4.  Procédé selon l'une quelconque des revendications précédentes, dans lequel la détermination des descripteurs locaux autour de certaines au moins des minuties dudit ensemble de minuties est telle que les descripteurs locaux comprennent, relativement aux zones comportant une quantité d'informations supplémentaires estimées avec le niveau de confiance donné, supérieure à un seuil, des valeurs calculées à partir desdites informations, et, relativement aux zones comportant une quantité d'informations supplémentaires estimées avec le niveau de confiance donné, inférieure audit seuil, des effacements.

5.  Procédé selon l'une quelconque des revendications précédentes, dans lequel on estime en outre des niveaux de qualité associés respectivement auxdites informations supplémentaires et dans lequel les descripteurs locaux comprennent, relativement à des zones comportant des informations supplémentaires estimées avec le niveau de confiance donné, des valeurs calculées à partir desdites informations en tenant compte des niveaux de qualité estimés.

6. Procédé selon l'une quelconque des revendications précédentes, dans lequel la détermination des descripteurs locaux est telle que les descripteurs locaux sont invariants par rotation de l'empreinte digitale.

7. Procédé selon l'une quelconque des revendications précédentes, dans lequel la détermination des descripteurs locaux comprend la détermination de zones autour de certaines au moins des minuties dudit ensemble de minuties et l'application de filtres respectifs dans les zones déterminées.

8. Dispositif pour la détermination d'une pseudo-identité à partir de caractéristiques d'un ensemble de minuties correspondant à une empreinte digitale selon l'une quelconque des revendications précédentes, le dispositif comprenant :

   - une unité pour estimer des informations supplémentaires sur ladite empreinte digitale à partir des caractéristiques dudit ensemble de minuties et avec un niveau de confiance donné ;
   - une unité pour déterminer des descripteurs locaux autour de certaines au moins des minuties dudit ensemble de minuties, de façon que les descripteurs locaux comprennent, relativement à des zones comportant des informations supplémentaires estimées avec le niveau de confiance donné, des valeurs calculées à partir desdites informations et, relativement à des zones ne comportant pas d'informations supplémentaires estimées avec le niveau de confiance donné, des effacements ;
   - une unité pour quantifier les descripteurs locaux déterminés selon un nombre donné de valeurs entières, une valeur étant réservée aux effacements ;
   - une unité pour coder les descripteurs locaux quantifiés à l'aide d'un algorithme de codage tolérant des erreurs et associé à un algorithme de décodage agencé pour tenir compte des erreurs et des effacements au sein des descripteurs locaux quantifiés codés ; et
   - une unité pour déterminer une pseudo-identité à partir de certains au moins des descripteurs locaux quantifiés codés.

9. Produit programme d'ordinateur pour la détermination d'une pseudo-identité à partir de caractéristiques d'un ensemble de minuties correspondant à une empreinte digitale selon l'une quelconque des revendications 1 à 7, le produit programme d'ordinateur comprenant des instructions de code pour mettre en oeuvre les étapes suivantes lorsqu'il est chargé et exécuté sur des moyens informatiques :

   - estimer des informations supplémentaires sur ladite empreinte digitale à partir des caractéristiques dudit ensemble de minuties et avec un niveau de confiance donné ;
   - déterminer des descripteurs locaux autour de certaines au moins des minuties dudit ensemble de minuties, de façon que les descripteurs locaux comprennent, relativement à des zones comportant des informations supplémentaires estimées avec le niveau de confiance donné, des valeurs calculées à partir desdites informations et, relativement à des zones ne comportant pas d'informations supplémentaires estimées avec le niveau de confiance donné, des effacements ;
   - quantifier les descripteurs locaux déterminés selon un nombre donné de valeurs entières, une valeur étant réservée aux effacements ;
   - coder les descripteurs locaux quantifiés à l'aide d'un algorithme de codage tolérant des erreurs et associé à un algorithme de décodage agencé pour tenir compte des erreurs et des effacements au sein des descripteurs locaux quantifiés codés ; et
   - déterminer une pseudo-identité à partir de certains au moins des descripteurs locaux quantifiés codés.

10. Utilisation de la pseudo-identité déterminée selon l'une quelconque des revendications 1 à 7 dans des procédés mettant en oeuvre des algorithmes cryptographiques.

**Patentansprüche**

1. Verfahren zum Bestimmen einer Pseudoidentität anhand von Eigenschaften einer Gruppe von Minuzien, die einem Fingerabdruck entsprechen, das die folgenden Schritte umfasst:

   - Schätzen zusätzlicher Informationen über den Fingerabdruck anhand der Eigenschaften der Gruppe von Minuzien und mit einem gegebenen Vertrauenskoeffzienten;

- Bestimmen lokaler Deskriptoren wenigstens um bestimmte Minuzien der Gruppe von Minuzien, derart, dass die lokalen Deskriptoren in Bezug auf Zonen, die zusätzliche Informationen, die mit dem gegebenen Vertrauenskoeffizienten geschätzt werden, enthalten, Werte umfassen, die anhand dieser Informationen berechnet werden, und in Bezug auf Zonen, die keine zusätzlichen Informationen, die mit dem gegebenen Vertrauenskoeffizienten geschätzt werden, enthalten, Leerstellen umfassen;

- Quantifizieren der bestimmten lokalen Deskriptoren nach einer gegebenen Anzahl ganzzahliger Werte, wobei ein Wert für die Leerstellen reserviert ist;

- Codieren der quantifizierten lokalen Deskriptoren mit Hilfe eines fehlertoleranten Codierungsalgorithmus, der einem Decodierungsalgorithmus zugeordnet ist, der dafür ausgelegt ist, Fehler und Leerstellen in den codierten quantifizierten lokalen Deskriptoren zu berücksichtigen; und

- Bestimmen einer Pseudoidentität wenigstens anhand bestimmter der codierten quantifizierten lokalen Deskriptoren.

2. Verfahren nach Anspruch 1, wobei die geschätzten zusätzlichen Informationen auf Orientierungen an verschiedenen Punkten des Fingerabdrucks bezogen sind.

3. Verfahren nach Anspruch 1 oder 2, wobei die geschätzten zusätzlichen Informationen auf eine Form von Kammlinien des Fingerabdrucks bezogen sind.

4. Verfahren nach einem der vorhergehenden Ansprüche, wobei das Bestimmen der lokalen Deskriptoren wenigstens um bestimmte Minuzien der Gruppe von Minuzien derart ist, dass die lokalen Deskriptoren in Bezug auf Zonen, die eine Menge von mit dem gegebenen Vertrauenskoeffizienten geschätzten zusätzlichen Informationen enthalten, die größer als ein Schwellenwert ist, Werte umfassen, die anhand dieser Informationen berechnet werden, und in Bezug auf Zonen, die eine Menge von mit dem gegebenen Vertrauenskoeffizienten geschätzten zusätzlichen Informationen, die kleiner als der Schwellenwert ist, enthalten, Leerstellen umfassen.

5. Verfahren nach einem der vorhergehenden Ansprüche, wobei außerdem Qualitätskoeffizienten geschätzt werden, die jeweils den zusätzlichen Informationen zugeordnet sind, und wobei die lokalen Deskriptoren in Bezug auf Zonen, die mit dem gegebenen Vertrauenskoeffizienten geschätzte zusätzliche Informationen enthalten, Werte umfassen, die anhand dieser Informationen unter Berücksichtigung der geschätzten Qualitätskoeffzienten berechnet werden.

6. Verfahren nach einem der vorhergehenden Ansprüche, wobei das Bestimmen der lokalen Deskriptoren derart ist, dass die lokalen Deskriptoren gegenüber einer Drehung des Fingerabdrucks invariant sind.

7. Verfahren nach einem der vorhergehenden Ansprüche, wobei das Bestimmen der lokalen Deskriptoren das Bestimmen von Zonen wenigstens um bestimmte Minuzien der Gruppe von Minuzien und das Anwenden entsprechender Filter in den bestimmten Zonen umfasst.

8. Vorrichtung zum Bestimmen einer Pseudoidentität anhand von Eigenschaften einer Gruppe von Minuzien, die einem Fingerabdruck entspricht, nach einem der vorhergehenden Ansprüche, wobei die Vorrichtung Folgendes umfasst:

- eine Einheit zum Schätzen zusätzlicher Informationen über den Fingerabdruck anhand der Eigenschaften der Gruppe von Minuzien und mit einem gegebenen Vertrauenskoeffizienten;

- eine Einheit zum Bestimmen lokaler Deskriptoren wenigstens um bestimmte Minuzien der Gruppe von Minuzien in der Weise, dass die lokalen Deskriptoren in Bezug auf Zonen, die zusätzliche Informationen, die mit dem gegebenen Vertrauenskoeffizienten geschätzt werden, enthalten, Werte umfassen, die anhand dieser Informationen berechnet werden, und in Bezug auf Zonen, die keine zusätzlichen Informationen, die mit dem gegebenen Vertrauenskoeffizienten geschätzt werden, enthalten, Leerstellen umfassen;

- eine Einheit zum Quantifizieren der bestimmten lokalen Deskriptoren nach einer gegebenen Anzahl ganzzahliger Werte, wobei ein Wert für die Leerstellen reserviert ist;

- eine Einheit zum Codieren der quantifizierten lokalen Deskriptoren mit Hilfe eines fehlertoleranten Codierungsalgorithmus, der einem Decodierungsalgorithmus zugeordnet ist, der dafür ausgelegt ist, Fehler und Leerstellen in den codierten quantifizierten lokalen Deskriptoren zu berücksichtigen; und

- eine Einheit zum Bestimmen einer Pseudoidentität wenigstens anhand bestimmter der codierten quantifizierten lokalen Deskriptoren.

9. Computerprogrammprodukt zum Bestimmen einer Pseudoidentität anhand von Eigenschaften einer Gruppe von Minuzien, die einem Fingerabdruck entspricht, nach einem der Ansprüche 1 bis 7, wobei das Computerprogrammprodukt Codebefehle enthält, um die folgenden Schritte auszuführen, wenn es in Datenverarbeitungsmitteln geladen und darin ausgeführt wird:

- Schätzen zusätzlicher Informationen über den Fingerabdruck anhand von Eigenschaften der Gruppe von Minuzien und mit einem gegebenen Vertrauenskoeffizienten;
- Bestimmen lokaler Deskriptoren wenigstens um bestimmte Minuzien der Gruppe von Minuzien in der Weise, dass die lokalen Deskriptoren in Bezug auf Zonen, die zusätzliche Werte, die mit dem gegebenen Vertrauenskoeffizienten geschätzt werden, enthalten, Werte umfassen, die anhand dieser Informationen berechnet werden, und in Bezug auf Zonen, die keine zusätzlichen Informationen, die mit dem gegebenen Vertrauenskoeffizienten geschätzt werden, enthalten, Leerstellen umfassen;
- Quantifizieren der bestimmten lokalen Deskriptoren nach einer gegebenen Anzahl ganzzahliger Werte, wobei ein Wert für die Leerstellen reserviert ist;
- Codieren der quantifizierten lokalen Deskriptoren mit Hilfe eines fehlertoleranten Codierungsalgorithmus, der einem Decodierungsalgorithmus zugeordnet ist, der dafür ausgelegt ist, Fehler und Leerstellen in den codierten quantifizierten lokalen Deskriptoren zu berücksichtigen; und
- Bestimmen einer Pseudoidentität wenigstens anhand bestimmter der codierten quantifizierten lokalen Deskriptoren.

10. Verwendung der Pseudoidentität, die in Übereinstimmung mit einem der Ansprüche 1 bis 7 bestimmt wird, in Verfahren, die Verschlüsselungsalgorithmen ausführen.

**Claims**

1. A method of determining a pseudo-identity from characteristics of a set of minutiae corresponding to a fingerprint, comprising the steps of:

- estimating additional information on said fingerprint from characteristics of said set of minutiae and with a given level of confidence;
- determining local descriptors around at least some of the minutiae of said set of minutiae, the local descriptors comprising, relative to zones containing additional information estimated with the given level of confidence, values calculated from said information and, relative to zones not containing additional information estimated with the given level of confidence, erasures;
- quantizing the determined local descriptors according to a given number of integer values, a value being reserved for the erasures;
- coding the quantized local descriptors using an error-tolerant coding algorithm associated with a decoding algorithm devised in order to take account of the errors and erasures within the coded quantized local descriptors; and
- determining a pseudo-identity based on at least some of the coded quantized local descriptors.

2. The method as claimed in claim 1, wherein the estimated additional information relates to orientations at different points of the fingerprint.

3. The method as claimed in claim 1 or 2, wherein the estimated additional information relates to a shape of the fingerprint ridge lines.

4. The method as claimed in any one of the preceding claims, wherein the determination of the local descriptors around at least some of the minutiae of said set of minutiae is such that the local descriptors contain, relative to the zones containing a quantity of additional information estimated with the given level of confidence, above a threshold, values calculated from said information and, relative to the zones not containing a quantity of additional information estimated with the given level of confidence, below said threshold, erasures.

5. The method as claimed in any one of the preceding claims, wherein quality levels associated respectively with said additional information are further estimated, and wherein the local descriptors comprise, relative to the zones containing additional information estimated with the given level of confidence, values calculated from said information, taking account of the estimated quality levels.

**6.** The method as claimed in any one of the preceding claims, wherein the determination of the local descriptors is such that the local descriptors are rotation invariants of the fingerprint.

**7.** The method as claimed in any one of the preceding claims, wherein the determination of the local descriptors comprises determining zones around at least some of the minutiae of said set of minutiae and the application of respective filters in the determined zones.

**8.** A device for determining a pseudo-identity from characteristics of a set of minutiae corresponding to a fingerprint in accordance with any one of the preceding claims, the device comprising:

- a unit for estimating additional information on said fingerprint from the characteristics of said set of minutiae and with a given level of confidence;
- a unit for determining local descriptors around at least some of the minutiae of said set of minutiae, the local descriptors comprising, relative to zones containing additional information estimated with the given level of confidence, values calculated from said information and, relative to zones not containing additional information estimated with the given level of confidence, erasures;
- a unit for quantizing the determined local descriptors according to a given number of integer values, a value being reserved for the erasures;
- a unit for coding the quantized local descriptors using an error-tolerant coding algorithm associated with a decoding algorithm devised in order to take account of the errors and erasures within the coded quantized local descriptors; and
- a unit for determining a pseudo-identity based on at least some of the coded quantized local descriptors.

**9.** A computer program product for determining a pseudo-identity from characteristics of a set of minutiae corresponding to a fingerprint in accordance with any one of claims 1 to 7, the computer program product comprising code instructions for implementing the following steps when loaded and run on computer equipment:

- estimating additional information on said fingerprint from characteristics of said set of minutiae and with a given level of confidence;
- determining local descriptors around at least some of the minutiae of said set of minutiae, the local descriptors comprising, relative to zones containing additional information estimated with the given level of confidence, values calculated from said information and, relative to zones not containing additional information estimated with the given level of confidence, erasures;
- quantizing the determined local descriptors according to a given number of integer values, a value being reserved for the erasures;
- coding the quantized local descriptors using an error-tolerant coding algorithm associated with a decoding algorithm devised in order to take account of the errors and erasures within the coded quantized local descriptors; and
- determining a pseudo-identity based on at least some of the coded quantized local descriptors.

**10.** Use of the pseudo-identity determined in accordance with any one of claims 1 to 7 in methods implementing cryptographic algorithms.

FIG.1.

FIG.2.

EP 2 318 980 B1

FIG.3.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. ROSS et al.** Towards Reconstructing Fingerprints from Minutive Points. *Proc. SPIE,* 2005, vol. 5779 (1), 68-80
- **F. BENHAMMADI ; M.N. AMIROUCHE ; H. HENTOUS ; K. BEY BEGHDAD ; M. AISSANI.** Fingerprint matching from minutiae texture maps. *Pattern Recognition,* 2007, vol. 40, 189-197
- Information technology - Biometric data interchange formats - Part 2: Finger minutiae data. *ISO/IEC 19794-2,* 2005
- *ISO/IEC 19794-2,* 2005
- **R. CAPPELLI ; A. LUMINI ; D. MAIO ; D. MALTONI.** Fingerprint Image Reconstruction from Standard Templates. *IEEE Transactions on pattern analysis and machine intelligence,* Septembre 2007, vol. 29 (9

- **A. K. JAIN ; S. PRABHAKAR ; L. HONG ; S. PANKANTI.** FingerCode: a filterbank for fingerprint représentation and matching. *Proc. IEEE Computer Society, Conf. Computer Vision and Pattern Recognition (CVPR),* 1999, vol. 2, 187-193
- **A. W. K. KONG.** Palmprint Identication Based on Generalization of IrisCode. *PhD Thesis,* 2007
- **A. JUELS ; M. WATTENBERG.** A fuzzy Commitment Scheme. *ACM Conference on Computer and Communications Security,* 1999
- **FITZPATRICK.** *Errors-And-Erasures Decoding of BCH Codes,* Janvier 1998